# EUROPEAN PATENT SPECIFICATION

(11) **EP 4 280 920 B1**
(45) Date of publication and mention of the grant of the patent: **29.01.2025**
(21) Application number: 21769339.9
(22) Date of filing: 24.08.2021
(51) Int. Cl.: A47J 37/06

(54) **A COOKING UTENSIL**
KOCHGERÄT
USTENSILE DE CUISSON

(30) Priority: 21.01.2021 CN 202120168275 U
(43) Date of publication of application: 29.11.2023
(73) Proprietor: Zhejiang Shaoxing Supor Domestic Electrical Appliance Co., Ltd., Shaoxing, Zhejiang 312017 (CN)
(72) Inventor: ZHOU, Wei, Shaoxing, Zhejiang 312017 (CN); LENG, Jiong, Shaoxing, Zhejiang 312017 (CN)
(74) Representative: LLR
(86) International application number: PCT/CN2021/114315
(87) International publication number: WO 2022/156212

(56) References cited:
- CN-A- 105 496 220
- US-A1- 2005 223 906
- US-A1- 2019 254 473

## Description

### Field of the Invention

The invention relates to a cooking utensil and relates in particular to a cooking utensil having a baking pot.

### Background of the Invention

Currently, existing large-volume pressure cookers that have a baking function comprise a baking pot detachably placed inside an inner pot. Hot air is generated for baking function and flows into the inner pot via the cover of the cooker. During use, the hot air can flow to the space below the baking pot through the gap between the inner pot and the baking pot, which results in a loss of heat and affects the baking result. On the other hand, when a supplementary bottom heating is needed by means of a heater located at the bottom of the inner port, the heat generated by the bottom heater can also flow upwards through the gap between the inner pot and the baking pot and is distributed to the entire inner pot, and cannot be well concentrated at the bottom of the baking pot. Consequently, the temperature at the bottom of the baking pot rises slowly and cannot be high enough, providing a very low baking efficiency and affecting user experience. Examples of cooking utensils with baking pots and hot air generating means are shown in CN 105 496 220 A and US 2019/254473 A1.

Therefore, existing cooking utensils need to be improved.

### Summary of the Invention

The invention provides a cooking utensil provided with a baking pot and capable of concentrating heat below the baking pot, improving baking performance.

Specifically, the invention proposes the following technical solution: a cooking utensil comprises a body comprising an inner pot, a baking seat which generates hot air, a cover comprising a hot air duct extending from the baking seat to the inner pot, and a baking assembly detachably provided in the inner pot and comprising a baking pot for receiving food and a support assembly connected with the baking pot. the support assembly comprises a sealing component and prevents the hot air from flowing into a space located below the baking pot through a gap between an outer side of the baking pot and an inner side of the inner pot.

During the baking operation, the food inside the baking pot can be heated either by only the hot air from the top, or also by the bottom heating plate at the same time which heats the food located at the bottom of the baking pot. The support assembly divides the inner pot into an upper space and a lower space, and can prevent the hot air blown from the top from flowing to the lower space, reducing heat loss. At the same time, it can also concentrate the heat generated by the bottom heating plate in the lower space to heat the bottom of the baking pot when necessary, so as to prevent the heat from flowing upward through the gap between the inner pot and the baking pot, which causes heat loss at the bottom of the baking pot, thereby improving the baking performance.

According to a mode of realization of the invention, the support assembly comprises a support and a sealing ring, a supporting face of the support which supports the baking pot fits the baking pot, the sealing ring constitutes the sealing component, the sealing ring is located at the outer periphery of the support and fits the inner wall of inner pot. The support according to this embodiment can not only stably support the baking pot, but also fit well the baking pot, so that the hot air blown from the top and the heat generated by the bottom heating plate cannot pass between the support and the baking pot. In addition, the sealing ring is arranged between the support and the inner wall of the inner pot, so that the hot air from top and the heat from bottom cannot pass between the support and the inner pot. With the support and the sealing ring, the support assembly divides the inner pot into upper and lower spaces and thus reduces the heat loss and improves the baking performance.

According to a mode of realization of the invention, the support is provided with a positioning rib extending outwards all around it, the sealing ring enveloping the positioning rib. The sealing ring is thus reliably fixed to the support.

According to a mode of realization of the invention, an outer peripheral face of the sealing ring is provided with a ring rib abutting against the inner pot. The sealing performance of the sealing ring can be improved.

According to a mode of realization of the invention, the bottom of the support is provided with several supporting feet. The supporting feet prop on the side wall or bottom wall of the inner pot to stably support the baking pot.

According to a mode of realization of the invention, the top of the support is provided with several snap-fit holding parts, a side wall of the baking pot is provided with a ring-shaped slot that engages in a snap-fit manner with the snap-fit holding parts. The snap-fit fixation between the support assembly and the baking pot facilitates utilization and cleaning. Using the ring-shaped slot can facilitate assembly.

According to a mode of realization of the invention, the baking pot comprises a supporting handle configured to be fixed on top of the inner pot so as to hang the baking pot in the inner pot, support assembly comprising a sealing support which fits both the outer wall of the baking pot and the inner wall of the inner pot so as to block the gap between the outer side of the baking pot and the inner side of the inner pot. In this embodiment, the sealing support constitutes the sealing component and is the main part or the only part of the support assembly. The sealing support realizes the sealing of the gap between the baking pot and the inner pot alone. However, considering the required airtightness, the sealing component is usually a flexible part with low rigidity and cannot support the baking pot and its contents by its own. Therefore, the baking pot comprises a supporting handle on its top, which can fix and hang the baking pot on top of the inner pot.

Preferably, the supporting handle extends beyond the opening of the inner pot when it is placed on the top of the inner pot, which is convenient for the user to take. In addition, the sealing support can be tightly fitted with the outer wall of the baking pot through its own deformation, or may additionally include a snap-fit structure that engages with a corresponding slot provided on the outer wall of the baking pot to fit on the outer wall of the baking pot.

According to a mode of realization of the invention, the baking assembly further comprises a grease receiving plate located inside the baking pot, and a side wall of the baking pot is provided with a step supporting the grease receiving plate. The grease receiving plate can collect grease, prevent the inner pot from being soiled, and reduce cleaning work of the user.

According to a mode of realization of the invention, the grease receiving plate, a part of the side wall of the baking pot located below the grease receiving plate, the support assembly, and a bottom of the inner pot located below the support assembly together enclose a sealed chamber. Heat generated by the bottom heating plate can be concentrated inside the sealed chamber, improving the heating efficiency at the bottom and the baking performance. At the same time, the hot air coming from the top will not enter the sealed chamber, which reduces heat loss.

According to a mode of realization of the invention, the baking assembly further comprises a baking basket detachably mounted in the baking pot and provided with several feet propped on the grease receiving plate. The baking basket is more suitable for baking a small quantity of food.

According to a mode of realization of the invention, the sealing member is made of a high-temperature resistant flexible material, such as high-temperature resistant silicone or rubber. By "high-temperature resistance", it is meant to refer to the ability to maintain its form and performances during the baking process of the cooking utensil under a relatively high temperature, for example 300°C.

According to a mode of realization of the invention, the baking seat is provided with a heating wire assembly, a fan assembly and an air outlet, and the cover is provided with a hot air duct in communication with the air outlet and leading to the inner pot. The blower assembly can blow the heat generated by the heating wire assembly inside the baking pot through the hot air duct located in the cover to heat the top of the food, improving baking speed and the taste of the baked food.

According to a mode of realization of the invention, the baking seat is provided in the body. Alternatively, the baking seat can also be provided in the cover.

It should be understood that the above general description and the below detailed description are merely illustrative and explanatory and cannot limit the invention.

### Description of the Drawings

Figure 1 is a view in perspective of a cooking utensil according to a mode of realization of the invention.
Figure 2 is a sectional view of the cooking utensil shown in Figure 1.
Figure 3 is a sectional view of a baking pot of the cooking utensil shown in Figure 1.
Figure 4 is an exploded view in perspective of the baking pot of the cooking utensil shown in Figure 1.
Figure 5 is an enlarged partial view of the circle in Figure 2.
Figure 6 is a sectional view of a cooking utensil according to another mode of realization of the invention.
Figure 7 is an exploded view in perspective of the baking pot of the cooking utensil shown in Figure 6.

### Description of references:

inner pot 1, baking assembly 2, support assembly 20, baking pot 21, step 211, slot 212, grease receiving plate 22, baking basket 23, foot 231, support 24, supporting face 241, positioning rib 242, supporting foot 243, snap-fit holding part 244, reinforcing rib 245, sealing ring 25, ring rib 251, gap 100, sealed chamber 200, baking seat 3, fan 31, electric motor 32, heating wire assembly 33, air outlet 34, hot air duct 35, wind passage 36, sealing support 40, snap-fit fastener 402, cover 5.

### Detailed Description of the Invention

Exemplary modes of realization are described in detail herein and illustrated by way of example in the accompanying drawings. When the description below refers to the accompanying drawings, unless otherwise indicated, the same references in different accompanying drawings represent the same or similar elements. The modes of realization described in the following exemplary modes of realization do not represent all the modes of realization consistent with the invention. To the contrary, they are merely examples of means, systems, devices, and methods consistent with some aspects of the invention.

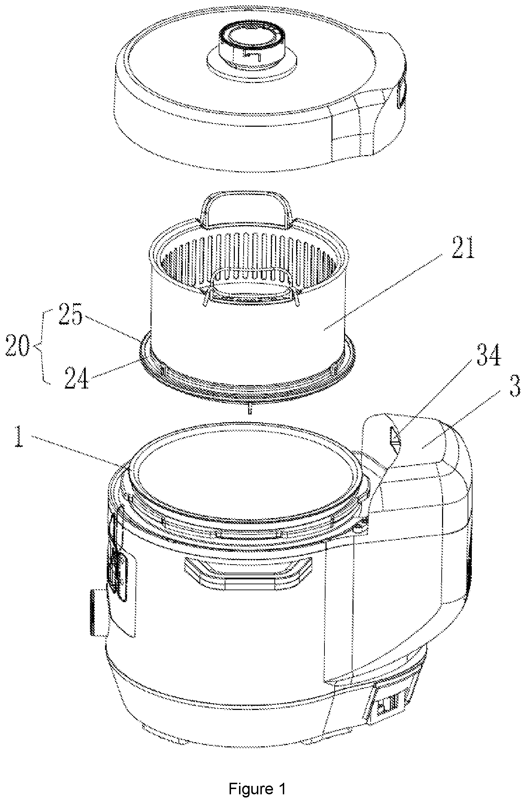

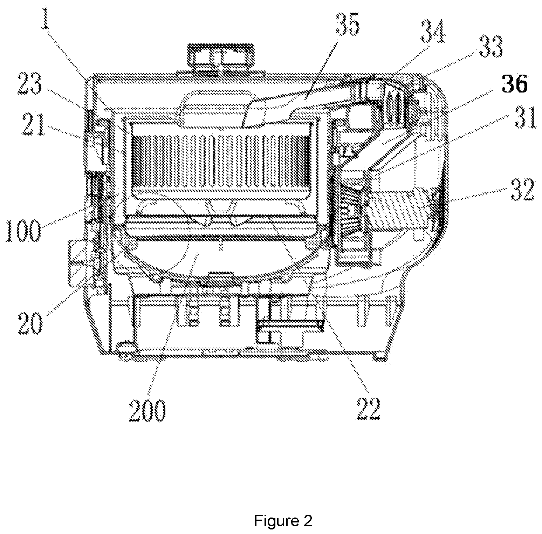

In reference to Figure 1 and Figure 2, a cooking utensil of the invention comprises a body and a cover. The cooking utensil may comprise a plurality of covers, each of which can cover the body and configured to execute different cooking process. The cover shown in the drawings is a baking cover. The body, in addition to cooperating with the baking cover for cooking by baking, can also cooperate with a pressure cover (not illustrated) for pressure cooking. The body comprises structures such as an outer shell, a base, an intermediate plate, a temperature maintaining hood, a heating plate, and an inner pot 1. The inner pot 1 is located inside the temperature maintaining hood. The heating plate is located between the bottom of the temperature maintaining hood and the bottom of the inner pot 1 and used for providing a heat source. Those structures are similar to the body structures of conventional electrical pressure cookers and are not described further herein.

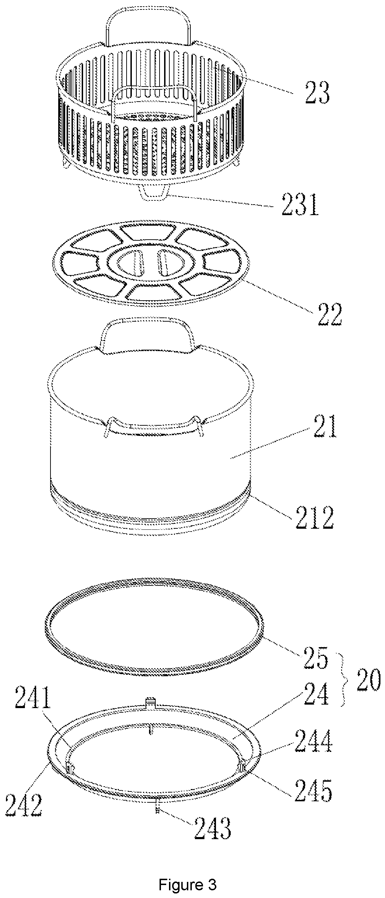

The cooking utensil further comprises a baking assembly 2 detachably provided in the inner pot 1. In reference to Figure 3, the baking assembly 2 comprises a baking pot 21 for receiving food, a support assembly 20 connected with the baking pot 21, a grease receiving plate 22 and a baking basket 23. The baking pot 21 is in the shape of a barrel that is open at the top. Several vent holes are formed in the bottom wall of the baking pot 21. The grease receiving plate 22 is positioned inside the baking pot 21 in a suspended way and used for receiving grease. At the same time, it can support the baking basket 23. The baking basket 23 is also in the shape of a barrel that is open at the top. Its side wall and bottom wall are both provided with vent holes. The baking pot 21 and the baking basket 23 are respectively provided with handles at their tops which enable a user to lift and hold them. In this mode of realization, the baking basket 23 is selectively used. If food to be baked is of a relatively small volume, it can be placed inside the baking basket 23, which is then placed inside the baking pot 21. If food to be baked is of a relatively large volume, it can be directly placed inside the baking pot 21 without using the baking basket 23.

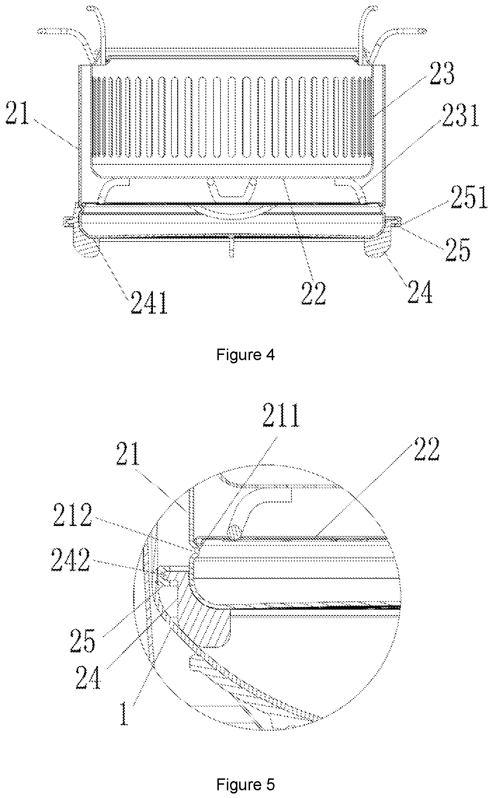

In reference to Figure 3 and Figure 4 in combination with Figure 2 and Figure 5, the support assembly 20 comprises a ring-shaped support 24 and a sealing ring 25. The support 24 is made of a metal or a high temperature resistant plastic and used for supporting the baking pot 21. The sealing ring 25 is located at the peripheral border of the support 24. After the support assembly 20 is placed inside the inner pot 1, the sealing ring 25 fits the inner side wall of the inner pot 1. A gap 100 is formed between the side wall of the baking pot 21 and the side wall of the inner pot 1. Particularly in reference to Figure 5, as the support 24 supports the baking pot 21 and is in tight contact with the baking pot 21, and the sealing ring 25 fits the inner pot 1, the support assembly 20 essentially blocks the gap 100 in the vertical direction. As such, on the one hand, heat generated by the heating plate near the bottom of the inner pot 1 cannot diffuse upwards through the gap 100, on the other hand, hot air flowing in the inner pot 1 from the top cannot flow downwards through the gap either. Therefore, the heating efficiency at the bottom of the baking pot 21 and at the top of the food inside it can both be increased and the baking performance is improved.

The contour of the inner side face of the support 24 is substantially consistent with the size and contour of the transition part between the side wall and bottom wall of the baking pot 21. The part of the inner side face which supports the baking pot 21 is the supporting face 241. The supporting face 241 supports at least the peripheral border of the bottom wall of the baking pot 21 and is in the shape of a whole ring, which not only can stably support the baking pot 21 but also eliminates any gap between the support assembly 20 and the baking pot 21. Therefore, hot air from the top and heat from the bottom cannot pass between the support and the inner pot, which can improve the heating efficiency and baking performance.

In this mode of realization, the sealing ring 25 is sleeved on the outside of the support 24. The support 24 is provided with a positioning rib 242 extending outwards around it. The sealing ring 25 envelops the positioning rib 242. The section of the sealing ring 25 is in the shape of a horizontal U, with an opening that is interference fitted with the positioning rib 242 and reliably fixes the sealing ring 25 to the support 24. As a simple replacement, the sealing ring 25 can also be directly injection molded only at the border of the support 24. The outer peripheral face of the sealing ring 25 is provided with a ring rib 251. The ring rib 251 can tightly abut against the inner wall of the inner pot 1, improving the sealing performance of the sealing ring 25. The ring rib 251 can be provided in a continuous manner and in a plurality form (2 in the present mode of realization).

A step 211 is formed in a circle around the inner side of the side wall of the baking pot 21. The grease receiving plate 22 props on the step 211. The diameter of the grease receiving plate 22 is essentially the same as that of the baking pot 21. The grease receiving plate 22 can collect grease, prevent the inner pot 1 from being soiled, and reduce the cleaning work of a user. The border of the grease receiving plate 22 is crimped to avoid scratching the baking pot 21. Particularly in reference to Figure 2, the grease receiving plate 22, the part of the baking pot 21 located below the grease receiving plate 22, the support assembly 20, and the bottom of the inner pot 1 located below the sealing ring 25 together enclose a sealed chamber 200. Heat generated by the bottom heating plate can be concentrated inside the sealed chamber 200, while the hot air from the top cannot enter the sealed chamber 200, thereby improving the heating efficiency and the baking performance.

The baking basket 23 is detachably provided inside the baking pot 21 and is provided with several feet 231 propped on the grease receiving plate 22. The feet 231 is in the general shape of a U and hangs the baking basket 23 inside the baking pot 21.

The bottom of the support 24 is provided with several supporting feet 243. The supporting feet 243 prop on the bottom wall of the inner pot 1. The bottom face of the supporting feet 243 is consistent with the bottom of the inner pot 1 in shape so as to stably support the baking pot 21. The top of the support 24 is provided with several snap-fit holding parts 244. A ring-shaped slot 212 is correspondingly formed at the outer side of the above-described step 211 at the outer side of the side wall of the baking pot 21. The snap-fit holding parts 244 engage with the slot 212 in a snap-fit manner. The support assembly 20 is fixed to the bottom side of the baking pot 21 in a snap-fit manner and is placed inside or removed from the inner pot 1 together with the baking pot 21, thereby facilitating utilization and separate cleaning with the baking pot 21. The snap-fit holding parts 244 are provided with a reinforcing rib 245 at the back side, which can increase the strength of the snap-fit holding parts 244. When the baking pot 21 is pressed downwards into the support 24, the ring-shaped slot 212 and the snap-fit holding parts 244 can be fixed in a snap-fit manner, facilitating assembly and without the need to adjust directions.

Returning to Figure 1 and Figure 2, we can see that a baking seat 3 located at the rear side of the body is formed between the intermediate plate and the outer shell of the body. A fan 31, an electric motor 32 driving the fan 31, a heating wire assembly 33, and an air outlet 34 are provided in the baking seat 3. The cover is provided with a hot air duct 35 in communication with the air outlet 34. When the cooking utensil is used for baking process, the electric motor 32 drives the fan 31 to rotate thus to blow air to the heating wire assembly 33 through the wind passage 36. Then, with the heat generated by the heating wire assembly 33, the hot air is blown into baking pot 21 through the hot air duct 35 located in the cover. The hot air heats the top of the food, increasing baking speed and improving the taste of baked food. In a non-illustrated mode of realization, the baking seat can also be provided in the baking cover.

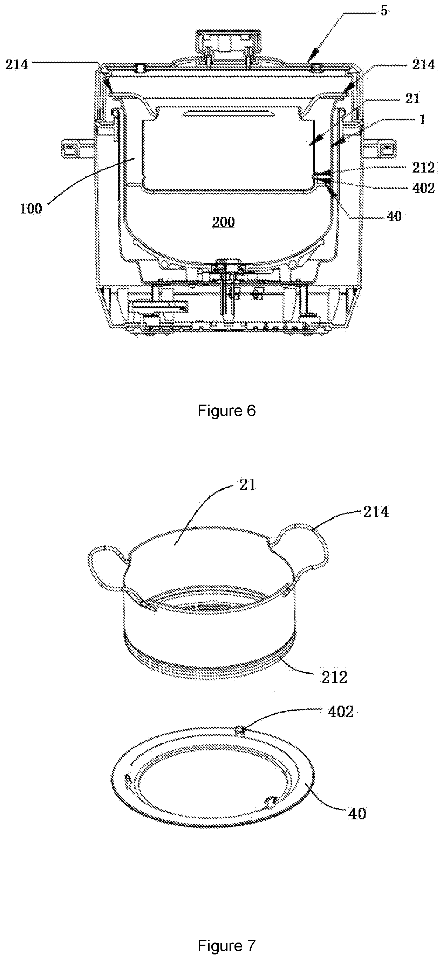

In reference to Figures 6 and 7, which mainly show another mode of realization of the support assembly 20 and the baking pot 21. As shown in Fig. 7, different from the above embodiment, the support assembly 20 only includes a single component, namely the sealing support 40, the general form of which is annular. The inner side of the sealing support 40 fits the outer wall of the baking pot 21 and the outer side of the sealing support 40 fits the inner wall of the inner pot 1. Therefore, the gap 100 between the outside of the baking pot 21 and the inside of the inner pot 1 is closed by the sealing support which constitutes the sealing component of the support assembly. The sealing support 40 is tightly attached to and fits the outer wall of the baking pot 21 mainly through its own deformation. In this embodiment, it also includes three snap-fit fasteners 402, which are engaged with a corresponding slot 212 provided on the outer wall of the baking pot 21, so as to fit the outer wall of the baking pot 21. The structure of this support assembly 20 is simpler.

The sealing support 40 is made of high temperature resistant silicone or rubber, and the gap 100 is well sealed by the flexibility of the material. However, the flexible material is usually not rigid enough to support the baking pot 21 and its contents on its own. Therefore, the top of the baking pot 21 includes a support handle 214, which can fix and hang the baking pot 21 on the top of the inner pot 1. According to a preferred embodiment, as shown in FIG. 6, when the support handle 214 is placed on the top of the inner pot 1, it extends beyond the opening of the inner pot 1 in the radial direction, so as to facilitate the user to take it.

The terms used in the application are merely for the purpose of describing specific modes of realization and not intended to limit the invention. Singular forms, such as "a", "an", and "the", used in the application are also intended to include the plural form, unless the context clearly indicates another meaning. It should also be understood that the term "and/or" used herein means including any and all possible combinations of one or more associated listed items.

Terms of relative spatial position such as "top", "bottom", "left", "right", "front", "back", "thickness", "radial", and "axial" used herein describe the relationship of a feature relative to another feature as shown in the accompanying drawings for the purpose of facilitating description and are not limited to a position or a spatial orientation. It can be understood that, based on different positioning of a product, terms of relative spatial position can be intended to include different positioning other than that shown in a drawing and should not be understood to be limitative. In addition, the qualifier "horizontal" used herein does not completely equate along the direction perpendicular to the gravity and allows a certain degree of inclination.

"Comprise", "include", and similar terms mean the element or item appearing before "comprise" or "include" includes the element or item appearing after "comprise" or "include" and its equivalent, and does not exclude other element or item.

It should be noted that, when an element is described as "fixed" to another element, it can be directly fixed to a surface of the other element, and can also be at a distance from a surface of the other element. Terms such as "mount", "connect", "connected", and "fixed" should be interpreted broadly. For example, it can be a fixed connection, or a removable connection , or being formed integrally; it can be a mechanical connection or an electrical connection, or communication can be made between each other; it can be a direct connection, or an indirect connection through an intermediary, or a communication between the inside of two elements or an interaction relationship between two elements, unless otherwise specifically defined.

In the application, unless otherwise specifically stipulated and defined, a first feature being "above" or "below" a second feature can mean that the first and second features are in direct contact, or in indirect contact through an intermediary. In addition, a first feature being "above", "on top of", and "over" a second feature can mean that the first feature is directly above or obliquely above the second feature, or merely mean that the level of the first feature is higher than that of the second feature. A first feature being "below", "under", and "beneath" the second feature can mean that the first feature is directly below or obliquely below the second feature or merely mean that the level of the first feature is lower than that of the second feature.

It should be understood that "first", "second", and similar terms used in the specification of the application do not mean any order, number, or significance and are merely used to distinguish different components. "A plurality" or "multiple layers" and similar expressions mean two or a number more than two.

What has been described are merely preferred modes of realization of the invention of the cooking utensil of the invention and are not used to limit the invention. Any modification, equivalent replacement, or improvement made within the scope of the claims shall all fall within the scope of protection of the invention.

## Claims

1. A cooking utensil, comprising
- a body comprising an inner pot (1),
- a baking seat (3) which generates hot air,
- a cover comprising a hot air duct (35) extending from the baking seat (3) to the inner pot (1), and
- a baking assembly (2) detachably provided in the inner pot (1) and comprising a baking pot (21) for receiving food and a support assembly (20) connected with the baking pot (21),
**characterized in that**, the support assembly (20) comprises a sealing component and prevents the hot air from flowing into a space located below the baking pot (21) through a gap (100) between an outer side of the baking pot (21) and an inner side of the inner pot (1).

2. The cooking utensil of claim 1, **characterized in that**, the support assembly comprises a support (24) and a sealing ring (25), a supporting face (241) of the support (24) which supports the baking pot (21) fitting the baking pot (21), the sealing ring (25) constituting the sealing component, the sealing ring (25) being located at the outer periphery of the support (24) and fitting the inner wall of inner pot (1).

3. The cooking utensil of claim 2, **characterized in that**, the support (24) is provided with a positioning rib (242) extending outwards all around it, the sealing ring (25) enveloping the positioning rib (242).

4. The cooking utensil of claim 2 or 3, **characterized in that**, an outer peripheral face of the sealing ring (25) is provided with a ring rib (251) abutting against the inner pot (1).

5. The cooking utensil of any one of claims 2 to 4, **characterized in that**, the bottom of the support (24) is provided with several supporting feet (243).

6. The cooking utensil of any one of claims 2 to 5, **characterized in that**, the top of the support (24) is provided with several snap-fit holding parts (244), a side wall of the baking pot (21) being provided with a ring-shaped slot (212) that engages in a snap-fit manner with the snap-fit holding parts (244).

7. The cooking utensil of claim 1, **characterized in that**, the baking pot (21) comprises a supporting handle (214) configured to be fixed on top of the inner pot (1) so as to hang the baking pot (21) inside the inner pot (1), the support assembly (20) comprising a sealing support (40) which fits both the outer wall of the baking pot (21) and the inner wall of the inner pot (1) so as to seal the gap (100) between the outer side of the baking pot (21) and the inner side of the inner pot (1).

8. The cooking utensil of any one of claims 1 to 7, **characterized in that**, the baking assembly (2) further comprises a grease receiving plate (22) located inside the baking pot (21), and an inner side wall of the baking pot (21) being provided with a step (211) supporting the grease receiving plate (22).

9. The cooking utensil of claim 8, **characterized in that**, the grease receiving plate (22), the part of the side wall of the baking pot (21) located below the grease receiving plate (22), the support assembly (20), and the bottom of the inner pot (1) located below the support assembly (20) together enclose a sealed chamber (200).

10. The cooking utensil of claim 8 or 9, **characterized in that**, the baking assembly (2) further comprises a baking basket (23) detachably mounted in the baking pot (21) and provided with several feet (231) propped on the grease receiving plate (22).

11. The cooking utensil of any one of claims 1 to 10, **characterized in that**, the sealing component is made of a high temperature resistant flexible material.

12. The cooking utensil of any one of claims 1 to 11, **characterized in that**, the baking seat (3) is provided with a heating wire assembly (33), a fan assembly (31, 32) and an air outlet (34), the cover being provided with a hot air duct (35) in communication with the air outlet (34), an outlet of the hot air duct (35) leading into the inner pot (1).

13. The cooking utensil of any one of claims 1 to 12, **characterized in that**, the baking seat (3) is provided in the body.

## Patentansprüche

1. Kochgerät, bestehend aus
- einem Körper mit einem Innentopf (1),
- einem Backsitz (3), der Heißluft erzeugt,
- einer Abdeckung mit einem Heißluftkanal (35), der sich von dem Backsitz (3) zu dem Innentopf (1) erstreckt, und
- einer Backvorrichtung (2), die abnehmbar in dem Innentopf (1) vorgesehen ist und einen Backtopf (21) zur Aufnahme von Lebensmitteln und eine mit dem Backtopf (21) verbundene Trägeranordnung (20) aufweist,
**dadurch gekennzeichnet, dass** die Trägeranordnung (20) eine Dichtungskomponente aufweist und verhindert, dass die heiße Luft durch einen Spalt (100) zwischen einer Außenseite des Backtopfs (21) und einer Innenseite des Innentopfs (1) in einen unterhalb des Backtopfs (21) befindlichen Raum strömt.

2. Kochgerät nach Anspruch 1, **dadurch gekennzeichnet, dass** die Trägeranordnung einen Träger (24) und einen Dichtungsring (25) aufweist, wobei eine tragende Fläche (241) des Trägers (24), die den Backtopf (21) trägt, an den Backtopf (21) passt, wobei der Dichtungsring (25) die Dichtungskomponente bildet, wobei der Dichtungsring (25) am Außenumfang des Trägers (24) angeordnet ist und an die Innenwand des Innentopfes (1) passt.

3. Kochgerät nach Anspruch 2, **dadurch gekennzeichnet, dass** der Träger (24) mit einer um ihn herum nach außen verlaufenden Positionierungsrippe (242) versehen ist, wobei der Dichtungsring (25) die Positionierungsrippe (242) umschließt.

4. Kochgerät nach Anspruch 2 oder 3, **dadurch gekennzeichnet, dass** eine äußere Umfangsfläche des Dichtungsrings (25) mit einer Ringrippe (251) versehen ist, die am Innentopf (1) anliegt.

5. Kochgerät nach einem der Ansprüche 2 bis 4, **dadurch gekennzeichnet, dass** die Unterseite des Trägers (24) mit mehreren Stützfüßen (243) versehen ist.

6. Kochgerät nach einem der Ansprüche 2 bis 5, **dadurch gekennzeichnet, dass** die Oberseite des Trägers (24) mit mehreren einrastenden Halteteilen (244) versehen ist, wobei eine Seitenwand des Backtopfes (21) mit einem ringförmigen Schlitz (212) versehen ist, der in die einrastenden Halteteile (244) einrastet.

7. Kochgerät nach Anspruch 1, **dadurch gekennzeichnet, dass** der Backtopf (21) einen Haltegriff (214) aufweist, der so konfiguriert ist, dass er an der Oberseite des Innentopfes (1) befestigt wird, um den Backtopf (21) in den Innentopf (1) zu hängen, wobei die Trägeranordnung (20) einen Dichtungsträger (40) aufweist, der sowohl an die Außenwand des Backtopfes (21) als auch an die Innenwand des Innentopfes (1) passt, um den Spalt (100) zwischen der Außenseite des Backtopfes (21) und der Innenseite des Innentopfes (1) zu verschließen.

8. Kochgerät nach einem der Ansprüche 1 bis 7, **dadurch gekennzeichnet, dass** die Backvorrichtung (2) ferner eine Fettaufnahmeplatte (22) aufweist, die sich im Inneren des Backtopfes (21) befindet, und dass eine innere Seitenwand des Backtopfes (21) mit einer Stufe (211) versehen ist, die die Fettaufnahmeplatte (22) trägt.

9. Kochgerät nach Anspruch 8, **dadurch gekennzeichnet, dass** die Fettaufnahmeplatte (22), der Teil der Seitenwand des Backtopfes (21), der sich unterhalb der Fettaufnahmeplatte (22) befindet, die Trägeranordnung (20) und der Boden des Innentopfes (1), der sich unterhalb der Trägeranordnung (20) befindet, zusammen eine abgedichtete Kammer (200) einschließen.

10. Kochgerät nach Anspruch 8 oder 9, **dadurch gekennzeichnet, dass** die Backvorrichtung (2) ferner einen Backkorb (23) aufweist, der abnehmbar im Backtopf (21) angebracht und mit mehreren Füßen (231) versehen ist, die auf der Fettaufnahmeplatte (22) aufliegen.

11. Kochgerät nach einem der Ansprüche 1 bis 10, **dadurch gekennzeichnet, dass** die Dichtungskomponente aus einem hochtemperaturbeständigen, flexiblen Material hergestellt ist.

12. Kochgerät nach einem der Ansprüche 1 bis 11, **dadurch gekennzeichnet, dass** der Backsitz (3) mit einer Heizdrahtanordnung (33), einer Gebläseanordnung (31, 32) und einem Luftauslass (34) versehen ist, wobei der Deckel mit einem Heißluftkanal (35) versehen ist, der mit dem Luftauslass (34) in Verbindung steht, wobei ein Auslass des Heißluftkanals (35) in den Innentopf (1) führt.

13. Kochgerät nach einem der Ansprüche 1 bis 12, **dadurch gekennzeichnet, dass** der Backsitz (3) im Körper vorgesehen ist.

## Revendications

1. Un ustensile de cuisson, comprenant
- un corps comprenant un pot interne (1),
- un siège de cuisson (3) qui génère de l'air chaud,
- un couvercle comprenant un conduit (35) pour de l'air chaud, s'étendant du siège de cuisson (3) au pot interne (1), et
- un ensemble de cuisson (2) agencé de manière amovible dans le pot interne (1) et comprenant un pot de cuisson (21) destiné à recevoir des aliments et un ensemble de support (20) relié au pot de cuisson (21),
**caractérisé en ce que** l'ensemble de support (20) comprend un composant d'étanchéité et empêche l'air chaud de s'écouler dans un espace situé sous le pot de cuisson (21) à travers un espace (100) entre un côté externe du pot de cuisson (21) et un côté interne du pot interne (1).

2. L'ustensile de cuisson selon la revendication 1, **caractérisé en ce que** l'ensemble de support comprend un support (24) et un anneau d'étanchéité (25), une face d'appui (241) du support (24) qui supporte le pot de cuisson (21) venant en engagement ajusté avec le pot de cuisson (21), l'anneau d'étanchéité (25) constituant l'élément d'étanchéité, l'anneau d'étanchéité (25) étant situé à la périphérie externe du support (24) et venant en engagement ajusté avec la paroi interne du pot interne (1).

3. L'ustensile de cuisson selon la revendication 2, **caractérisé en ce que** le support (24) est pourvu d'une nervure de positionnement (242) s'étendant vers l'extérieur tout autour de lui, l'anneau d'étanchéité (25) enveloppant la nervure de positionnement (242).

4. L'ustensile de cuisson selon la revendication 2 ou la revendication 3, **caractérisé en ce qu'**une face périphérique externe de l'anneau d'étanchéité (25) est pourvue d'une nervure annulaire (251) venant en butée contre le pot interne (1).

5. L'ustensile de cuisson selon l'une quelconque des revendications 2 à 4, **caractérisé en ce que** la partie inférieure du support (24) est pourvue de plusieurs pieds de support (243).

6. L'ustensile de cuisson selon l'une quelconque des revendications 2 à 5, **caractérisé en ce que** le dessus du support (24) est pourvu de plusieurs pièces de maintien (244) à encliquetage, une paroi latérale du pot de cuisson (21) étant pourvue d'une fente annulaire (212) qui vient en engagement par encliquetage avec les pièces de maintien (244) à encliquetage.

7. L'ustensile de cuisson selon la revendication 1, **caractérisé en ce que** le pot de cuisson (21) comprend une poignée de support (214) configurée pour être fixée sur le dessus du pot interne (1) de manière à suspendre le pot de cuisson (21) à l'intérieur du pot interne (1), l'ensemble de support (20) comprenant un support d'étanchéité (40) qui vient en engagement ajusté avec à la fois la paroi externe du pot de cuisson (21) et la paroi interne du pot interne (1) de manière à fermer de manière étanche l'espace (100) entre le côté externe du pot de cuisson (21) et le côté interne du pot interne (1).

8. L'ustensile de cuisson selon l'une quelconque des revendications 1 à 7, **caractérisé en ce que** l'ensemble de cuisson (2) comprend en outre une plaque (22) de réception de graisse située à l'intérieur du pot de cuisson (21), une paroi latérale interne du pot de cuisson (21) étant pourvue d'un épaulement (211) supportant la plaque (22) de réception de graisse.

9. L'ustensile de cuisson selon la revendication 8, **caractérisé en ce que** la plaque (22) de réception de graisse, la partie de la paroi latérale du pot de cuisson (21) située sous la plaque (22) de réception de graisse, l'ensemble de support (20) et le fond du pot interne (1) situé sous l'ensemble de support (20) délimitent ensemble une chambre étanche (200).

10. L'ustensile de cuisson selon la revendication 8 ou la revendication 9, **caractérisé en ce que** l'ensemble de cuisson (2) comprend en outre un panier de cuisson (23) monté de manière amovible dans le pot de cuisson (21) et pourvu de plusieurs pieds (231) appuyés sur la plaque (22) de réception de graisse.

11. L'ustensile de cuisson selon l'une quelconque des revendications 1 à 10, **caractérisé en ce que** le composant d'étanchéité est réalisé dans un matériau flexible résistant aux hautes températures.

12. L'ustensile de cuisson selon l'une quelconque des revendications 1 à 11, **caractérisé en ce que** le siège de cuisson (3) est pourvu d'un ensemble formant fil chauffant (33), d'un ensemble formant ventilateur (31, 32) et d'une sortie d'air (34), le couvercle étant pourvu d'un conduit d'air chaud (85) en communication avec la sortie d'air (34), une sortie du conduit (35) pour de l'air chaud débouchant dans le pot interne (1).

13. L'ustensile de cuisson selon l'une quelconque des revendications 1 à 12, **caractérisé en ce que** le siège de cuisson (3) est placé dans le corps.
